# EUROPÄISCHE PATENTANMELDUNG

(11) **EP 1 122 023 A1**
(43) Veröffentlichungstag der Anmeldung: **08.08.2001**
(21) Anmeldenummer: 00102030.4
(22) Anmeldetag: 02.02.2000
(51) Int. Cl.: B23Q 3/155, B23B 3/16, B23Q 1/62, B23Q 1/48

(54) **Bearbeitungsmaschine zum Drehen und Fräsen**

(71) Anmelder: Maschinenfabrik Berthold Hermle Aktiengesellschaft, D-78559 Gosheim (DE)
(72) Erfinder: Braun, Hans-Dieter, 78665 Frittlingen (DE); Bernhard, Franz-Xaver, 78549 Spaichingen (DE)
(74) Vertreter: Vetter, Hans, Dipl.-Phys. Dr.

(57) **Zusammenfassung**

Es wird eine Bearbeitungsmaschine zum Drehen und Fräsen von Werksücken (49) vorgeschlagen, die eine durch einen ersten Motor (50) angetriebene Werkzeugspindel (19) mit horizontaler Drehachse besistzt, welche mittels einer ersten Schlittenanordnung (13) wenigstens in den beiden horizontalen Achsen motorisch am Maschinenständer (10) bewegbar ist. Eine durch einen zweiten Motor (27) angetriebene Werkstückspindel (26) ist schwenkbar am Maschinenständer (10) angeordnet, wobei ein Werktückspindel (26) vorgesehen ist. Diese Bearbeitungsmaschine ermöglicht mit zur zwei Spindelantrieben eine vollwertige Dreh- und Fräsbearbeitung von Werkstücken, wobei eine gute Sicht und ein guter Zugriff auf die Zerspanungsstelle und eine sehr variable Bearbeitung möglich sind.

## Beschreibung

Die Erfindung betrifft eine Bearbeitungsmaschine zum Drehen und Fräsen, wie sie beispielsweise aus der EP-A-0949029 bekannt ist.

Bei dieser bekannten Bearbeitungsmaschine wird das Werkstück in einer motorisch in Rotation versetzbaren, jedoch ansonsten ortsfesten Werkstückspindel bzw. -halterung eingespannt. Für die Fräsbearbeitung wird eine in drei Achsen verfahrbare und darüber hinaus schwenkbare Werkzeugspindel zum eingespannten Werkstück bewegt, das durch einen Positionierantrieb der Werkstückhalterung nach Wunsch verschiedene Drehpositionen einnehmen kann. Soll dagegen eine Drehbewegung erfolgen, so wird die Werkzeugspindel weggefahren, und dafür wird von der Seite her ein motorisch angetriebener Werkzeugrevolver mti Drehwerkzeugen herangefahren, wobei durch eine Drehbewegung das gewünschte Drehwerkzeug in Position gebracht wird. Die vielen hierfür benötigten Antriebe, nämlich für die Werkzeugspindel, die Werkstückspindel und das Revolvermagazin für die Drehwerkzeuge, führen zu einer relativ aufwendigen Konstruktion mit entsprechend hohen Herstellungskosten.

Eine Aufgabe der vorliegenden Erfindung besteht daher darin, eine Bearbeitungsmaschine zum Drehen und Fräsen zu schaffen, die bei gegenüber dem Stand der Technik erhöhter Bearbeitungsvariabilität mit weniger Antrieben auskommt.

Diese Aufgabe wird erfindungsgemäß durch die Merkmale des Anspruchs 1 gelöst.

In vorteilhafter Weise kann erfindungsgemäß der oder die Antriebe für das Revolvermagazin der Drehwerkzeuge eingespart werden, da die Werkzeughalterung für die Drehbearbeitung von der Werkzeugspindel mitübernommen wird. Die Schwenkbarkeit der Werkstückspindel gewährleistet eine variablere Berarbeitung und einen schnelleren Wechsel von der Drehbearbeitung zur Fräsbearbeitung und umgekehrt. Die horizontale Werkzeugspindel gewährleistet eine gute Sicht auf die Bearbeitungsstelle und einen günstigen Spänefall. Die Schwenkbarkeit der Werkstückspindel führt zusätzlich noch zu Vorteilen beim Rüsten und Laden von Werkstücken. Beispielsweise kann bei einer Stangenbearbeitung ein einfacher Vorschub dadurch erreicht werden, daß die Stange in eine: vertikale Position geschwenkt wird, so daß sie schwerkraftbedingt bis zu einem Anschlag automatisch nachgeschoben wird. Danach kann sie festgespannt und in einer beliebigen Winkelposition bearbeitet werden. Ein weiterer Vorteil ist schließlich noch die günstige Massenaufteilung der Gesamtanordnung.

Durch die in den Unteransprüchen aufgeführten Maßnahmen sind vorteilhafte Weiterbildungen und Verbesserungen der im Anspruch 1 angegebenen Bearbeitungsmaschine möglich.

Bei einer bevorzugten konstruktiven Ausgestaltung ist der Vertikalschlitten an einem turmartigen Bereich des Maschinenständers motorisch bewegbar und trägt die Werkstückspindel, wobei der turmartige Bereich die Werkzeugspindel in der Höhe überragt. Diese Anordung führt zu einem besonders guten Handling des Werkstücks und eignet sich insbesondere für die Stangenbearbeitung, da beispielsweise ein Stangenmagazin im Freiraum oberhalb der Werkzeugspindel angeordnet werden kann, so daß insgesamt eine kompakte und harmonische Anordnung erreicht wird.

Der Bearbeitungsbereich vor dem turmartigen Bereich ist an dessen mit der Werkstückspindel versehenen Seite angeordnet, wobei die Werkzeugspindel in diesen Bearbeitungsbereich hineinragt, was zu einer besonders guten Zugänglichkeit und Entsorgung der Späne u.dgl. führt.

Die Werkzeugspindel besitzt in vorteilhafter Weise Mittel zur Drehzahlumschaltung zwischen einer zum Fräsen, Bohren und Trennen geeigneten hohen Drehzahl und einer zum Positionieren von Drehwerkzeugen geeigneten niedrigeren Drehzahl. Dabei kann auch die Werkzeugspindel Mittel zur Drehzahlumschaltung zwischen einer zum Drehen hohen Drehzahl und einer zum Positionieren von Werkstücken geeigneten niedrigen Drehzahl aufweisen, so daß insgesamt nur zwei Antriebsmotoren für die genannten Vorgänge erforderlich sind.

Die erste horizontale Schlittenanordnung weist einen die Werkzeugspindel tragenden ersten Schlitten mit einer zur Drehachse der Werkzeugspindel ausgerichteten Bewegungsrichtung und einen diesen ersten Schlitten tragenden zweiten Schlitten auf, dessen Bewegungsrichtung senkrecht zur Bewegungsrichtung des ersten Schlittens ausgerichtet ist. Hierdurch kann sich die Werkzeugspindel seitlich am turmartigen Bereich vorbeibewegen und erreicht somit auf einfache Weise ein im wesentlichen als vertikale drehbare Scheibe ausgebildetes Trommelmagazin für Werkzeuge, dessen Drehachse parallel zur Drehachse der Werkzeugspindel ausgerichtet und vorzugsweise in derselben Höhe angeordnet ist, derart, daß ein Werkzeugwechsel durch Bewegung des zweiten Schlittens zwischen dem Trommelmagazin und der Bearbeitungsstellung durchführbar ist. Ein Werkzeugwechsel ist somit allein durch die Bewegung der Werkzeugspindel möglich und benötigt keinerlei sonstige Handling-Vorrichtungen, wie Greifer od.dgl. Ein Werkzeugwechsel kann sehr schnell und einfach durchgeführt werden.

Das insbesondere scheibenartige Trommelmagazin ist vorzugsweise drehbar im wesentlichen zwischen dem turmartigen Bereich des Maschinenständers und einem Führungsbereich für den zweiten Schlitten angeordnet, vorzugsweise am turmartigen Bereich selbst. Hierdurch wird eine optimale Platzausnutzung und eine gute Zugänglichkeit zum Trommelmagazin erreicht.

In einer vorteilhaften Ausgestaltung besitzt das Trommelmagazin umfangsseitig Aufnahmen für Einzelwerkzeuge und wenigstens eine Aufnahme für einen Drehwerkzeug-Revolver, so daß Fräs-, Bohr-, Trenn- und Drehwerkzeuge aus demselben Magazin entnommen werden können. Um das Trommelmagazin noch variabler auszugestalten, ist wenigstens ein Umfangsbereich für auswechselbare Einsätze ausgebildet. Solche Einsätze sind beispielsweise Halterungen für Drehwerkzeug-Revolver, Halterungen für Trennscheiben oder Segmente mit mehreren Aufnahmen für Einzelwerkzeuge, so daß auch noch nachträglich leicht Anpassungen an individuelle Erfordernisse möglich sind.

Die Schlittenanordnung für die Werkzeugspindel ist durch eine horizontal verschiebbare Lamellenabdeckung und die Schlittenanordnung für die Werkstückspindel durch eine vertikal verschiebbare Lamellenabdeckung gegenüber dem Bearbeitungsbereich abgedeckt, wobei die Werkzeugspindel und die Werkstückspindel durch die jeweiligen Lamellenabdeckungen hindurchgreifen oder an deren Bearbeitungsbereichsseite angeordnet sind, so daß in vorteilhafter Weise die Schlittenanordnungen gegenüber im Bearbeitungsbereich anfallenden Spänen u.dgl. geschützt sind.

In vorteilhafter Weise verläuft ein Späneförderer parallel zur Drehachse der Werkzeugspindel ausgehend vom Bearbeitungsbereich unterhalb der ersten Schlittenanordnung, so daß eine raumsparende und günstige Späneabfuhr ermöglicht wird.

Ein Ausführungsbeispiel der Erfindung ist in der Zeichnung dargestellt und in der nachfolgenden Beschreibung näher erläutert. Es zeigen:
- Fig. 1: eine perspektivische Ansicht einer Bearbeitungsmaschine bei der Drehbearbeitung,
- Fig. 2: dieselbe Maschine in einer Ansicht von oben,
- Fig. 3: dieselbe Maschine in einer Ansicht auf die Stirnseite der Werkzeugspindel und ein Werkzeug-Trommelmagazin, wobei der turmartige Bereich des Maschinenständers, der die Werkzeugspindel trägt, entfernt ist,
- Fig. 4: die Bearbeitungsmaschine in der perspektivischen Ansicht gemäß Fig. 1 bei der Fräsbearbeitung,
- Fig. 5: eine Seitenansicht dieser Bearbeitungsmaschine bei der Fräsbearbeitung und
- Fig. 6: eine Einzelansicht des Trommelmagazins mit auswechselbaren Segmenten.

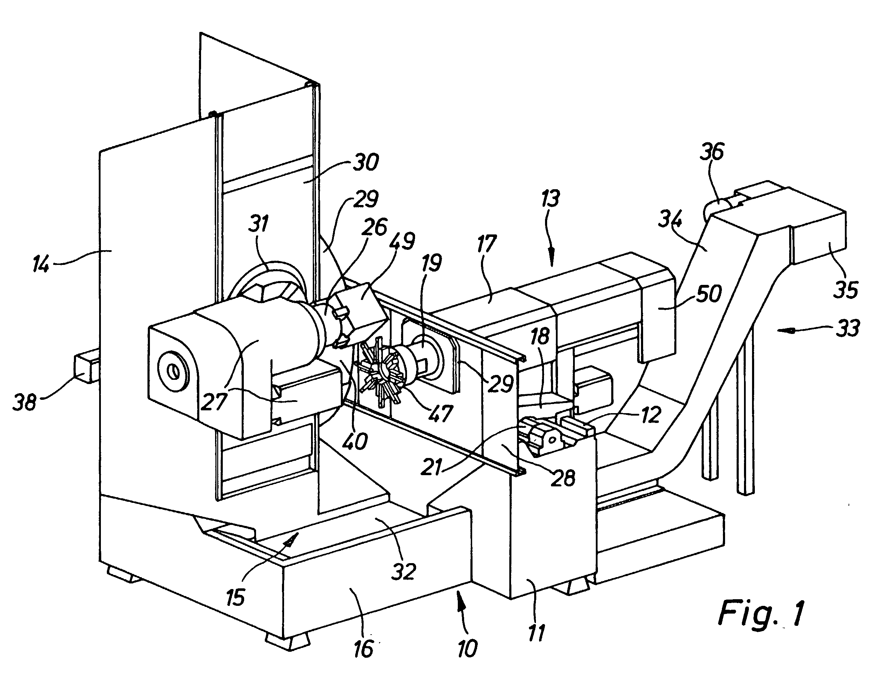

Die in den Fig. 1 bis 5 dargestellte Bearbeitungsmaschine zum Drehen und Fräsen weist einen Maschinenständer 10 auf, der im wesentlichen aus einer Führungsbank 11 mit horizontalen Führungsschienen 12 für eine erste Schlittenanordnung 13 und aus einem turmartigen, die Führungsbank 11 in der Höhe deutlich überragenden Führungsbereich 14 besteht. Der turmartige Führungsbereich 14 ist seitlich an der wesentlich längeren Führungsbank 11 so angeordnet, daß von oben her gesehen eine L-förmige Anordnung entsteht, die winkelig einen Bearbeitungsbereich 15 einschließt. Unterhalb dieses Bearbeitungsbereichs 15 ist eine Auffangwanne 16 für Späne, Schmiermittel u.dgl. angeordnet, die sowohl an der Führungsbank 11 als auch am turmartigen Führungsbereich 14 mit je einer Seite anliegt. Die erste Schlittenanordnung 13 besteht aus zwei senkrecht zueinander horizontal bewegbaren Schlitten 17, 18, wobei der erste Schlitten 17 eine Werkzeugspindel 19 mit horizontaler Drehachse trägt und senkrecht zur Längsrichtung der Führungsbank 11 am zweiten Schlitten 18 motorisch verschiebbar ist. Der zweite Schlitten 18 ist entlang der horizontalen Führungsschienen 12 auf der Führungsbank 11 in deren Längsrichtung bewegbar, wozu ein motorischer Spindelantrieb 20 dient, der eine Antriebsspindel 21 zwischen den beiden horizontalen Führungsschienen 12 antreibt.

Am turmartigen Führungsbereich 14 ist ein Schlitten 22 an vertikalen Führungsschienen 23 vertikal bewegbar. Ein Antriebsmotor 24 treibt hierzu eine Antriebsspindel 25 zwischen den Führungsschienen 23 an, wobei selbstverständlich anstelle eines Spindelantriebs grundsätzlich auch eine andere bekannte Antriebsart treten kann, zum Beispiel ein Zahnstangenantrieb od.dgl. Am Schlitten 22 ist eine mit einem Motorantrieb 27 versehene Werkstückspindel 26 schwenkbar gelagert.

Zum Schutz der ersten Schlittenanordnugn 13 ragt ein Bereich des die Werkzeugspindel 19 tragenden ersten Schlittens 17 durch eine verschiebbare Lamellenabdeckung 28 hindurch, die oberhalb und in Verlängerung der zum Bearbeitungsbereich 15 hin weisenden Seitenwandung der Führungsbank 11 angeordnet ist. Bei der Bewegung des ersten Schlittens 17 bewegt sich dieser zum Teil durch eine Öffnung 29 in der Lamellenabdeckung 28 hindurch, während sich die Lamellen bei der Bewegung des zweiten Schlittens 18 verschieben. Eine ähnliche Lamellenabdeckung 30 ist am turmartigen Führungsbereich 14 angeordnet und schützt den Schlitten 20 gegenüber dem Bearbeitungsbereich 15, wobei lediglich ein Teil der Schwenkvorrichtung 31, der Motorantrieb 27 und die Werkstückspindel 26 in den Bearbeitungsbereich 15 hineinragen. Durch die Lamellenabdeckungen 28, 30 werden die dahinterliegenden Schlitten und Antriebe gegenüber Spänen, Schmiermittel u.dgl. geschützt.

An der untersten Stelle der Auffangwanne 16 ist ein Förderband 32 eines Späneförderers 33 angeordnet, wobei die Wandungen in der Auffangwanne 16 so geneigt sind, daß die Bearbeitungsrückstände schwerkraftbedingt zum Förderband 32 oder einer sonstigen Fördereinrichtung gelangen, wie dies insbesondere aus den Fig. 1, 3 und 4 hervorgeht. Der Späneförderer 33 erstreckt sich quer zur Längsrichtung der Führungsbank 11 unter dieser hindurch, wobei sich dann ein Förderkanal 34 anschließt, der sich nach oben bis zu einer Auswurfstelle 35 erstreckt, unter der ein Wagen, Behälter od.dgl. zur Aufnahme der Späne positioniert werden kann. Ein Antriebsmotor 36 für den Späneförderer ist seitlich an der Auswurfstelle 35 angeordnet.

In einem Zwischenraum zwischen dem turmartigen Führungsbereich 14 und der Führungsbank 11 ist ein scheibenartiges Trommelmagazin 37 für Werkzeuge angeordnet. Das vertikal und parallel zur Längsrichtung der Führungsbank 11 ausgerichtete Trommelmagazin 37 ist am turmartigen Führungsbereich 14 drehbar gelagert und kann mittels eines Stellantriebs 38 winkelmäßig positioniert werden. Selbstverständlich ist prinzipiell auch eine Lagerung an der Führungsbank 11 oder einer sonstigen Lagervorrichtung möglich. Das Trommelmagazin 37 ist in einer gehäuseartigen Abdeckung 39 untergebracht, die prinzipiell auch entfallen kann. Diese Abdeckung 39 weist auf ihrer zur Werkzeugspindel 19 hin gerichteten Seite einen Durchbruch 40 auf, durch den die Werkzeugspindel 19 mittels des zweiten Schlittens 18 zu den im Trommelmagazin 37 gehaltenen Werkzeugen hin bewegt und zurückbewegt werden kann.

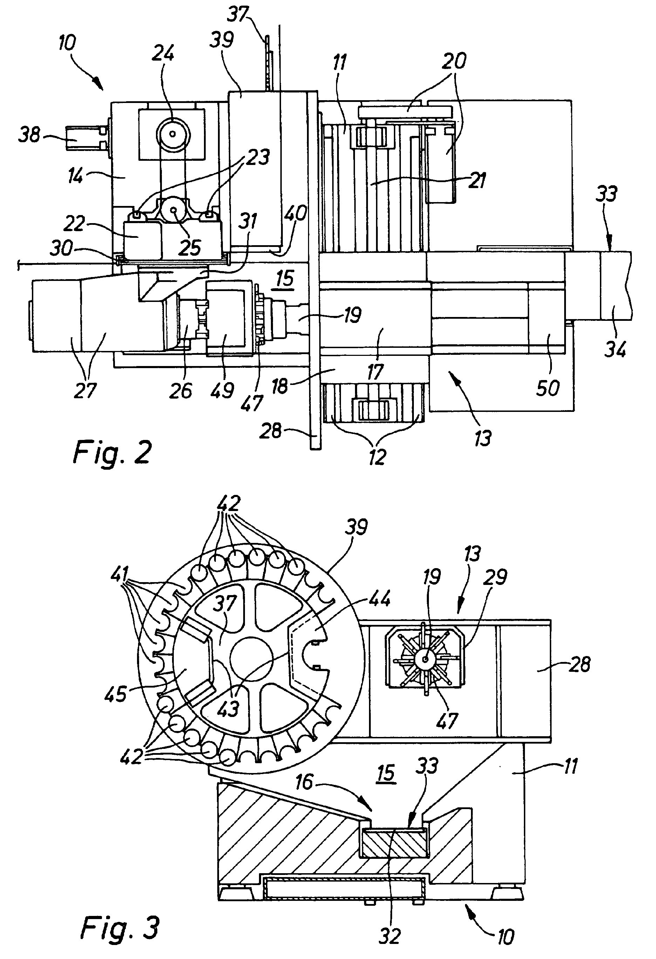

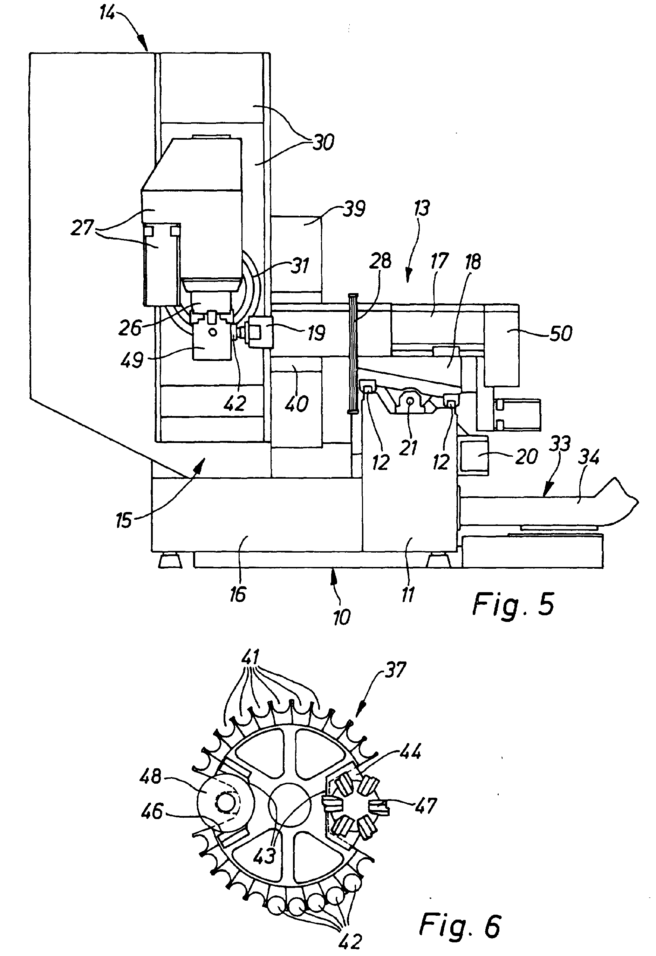

Gemäß den Fig. 3 und 6 besitzt das scheibenartige Trommelmagazin 37 umfangsseitig eine Vielzahl von Aufnahmen 41 für Einzelwerkzeuge 42, von denen in Fig. 3 einige schematisch durch Kreise dargestellt sind. Bei diesen Einzelwerkzeugen 42 handelt es sich beispielsweise um Bohrer, Fräser oder Schleifer. Darüber hinaus besitzt das Trommelmagazin 37 an zwei gegenüberliegenden Stellen des Umfangs zwei segmentartige Aussparungen 43 zur Aufnahme von auswechselbaren segmentartigen Einsätzen 44 - 46. In Fig. 3 dient der erste Einsatz 44 zur Aufnahme eines Drehwerkzeug-Revolvers 47. Ein solcher ist gemäß den Fig. 1 bis 3 in die Werkzeugspindel 19 eingesetzt. Er dient zur Aufnahme von strahlenförmig angeordneten Drehwerkzeugen, wobei in den Ausführungsbeispielen acht Drehwerkzeuge dargestellt sind. Die Zahl kann selbstverständlich variieren.

Der gemäß Fig. 3 dem Einsatz 44 gegenüberliegende Einsatz 45 besitzt fünf Aufnahmen 41 für Einzelwerkzeuge, wobei gemäß Fig. 3 ein Einzelwerkzeug 42 vom Einsatz 45 gehalten wird.

In Fig. 6 ist noch eine weitere Art eines Einsatzes 46 dargestellt, der zur Aufnahme eines Trennwerkzeugs 48 dient, das als Trennscheibe, Sägeblatt od.dgl. ausgebildet ist.

Durch die auswechselbaren Einsätze 44 - 46 kann das Trommelmagazin 37 individuell an Kundenwünsche oder -bedürfnisse angepaßt werden, wobei nachträgliche Änderungen jederzeit möglich sind. Falls lediglich Fräsarbeiten durchgeführt werden sollen, so können zwei Einsätze 45 verwendet werden, so daß lediglich Aufnahmen 41 für Einzelwerkzeuge 42 vorhanden sind. Weiterhin können zwei Einsätze 44 zur Aufnahme verschiedener Drehwerkzeug-Revolver 47 eingesetzt sein oder aber beliebige Variationen. Dabei kann im einfachsten Falle auch nur eine einzige segmentartige Aussparung 43 für einen Einsatz vorgesehen sein, oder aber die Zahl der segmentartigen Aussparungen 43 und Einsätze ist noch größer als in den Ausführungsbeispielen dargestellt.

Soll eine Drehbearbeitung durchgeführt werden, so wird das Trommelmagazin 37 in die in Fig. 3 dargestellte Position gebracht, und die Werkzeugspindel 19 bewegt sich horizontal mittels des zweiten Schlittens 18 zum Trommelmagazin 37 hin, wobei die Aufnahme eines Werkzeugs und das Ablegen durch Bewegung des ersten Schlittens 17 erfolgen. Danach erfolgt eine Rückbewegung der Werkzeugspindel 19 zusammen mit dem Drehwerkzeug-Revolver 47 in den Bearbeitungsbereich 15. In der Werkstückspindel 26 ist das zu bearbeitende Werkstück 49 eingespannt. Es wird durch den Motorantrieb 27 in eine für die Drehbearbeitung schnelle Rotation versetzt, wobei ein Motorantrieb 50 für die Werkzeugspindel 19 eine Positionierung des Drehwerkzeug-Revolvers 47 vornimmt, so daß das gewünschte Drehwerkzeug zum Einsatz gelangt.

Gemäß den Fig. 1 und 2 ist die Werkstückspindel 26 in einer Position mit horizontaler Drehachse fixiert. Für die stirnseitige Drehbearbeitung des Werkstücks 49 ist ein Verschwenken der Werkstückspindel 26 in die vertikale Position möglich, wobei selbstverständlich auch Schrägpositionen im Einzelfall erforderlich sein können.

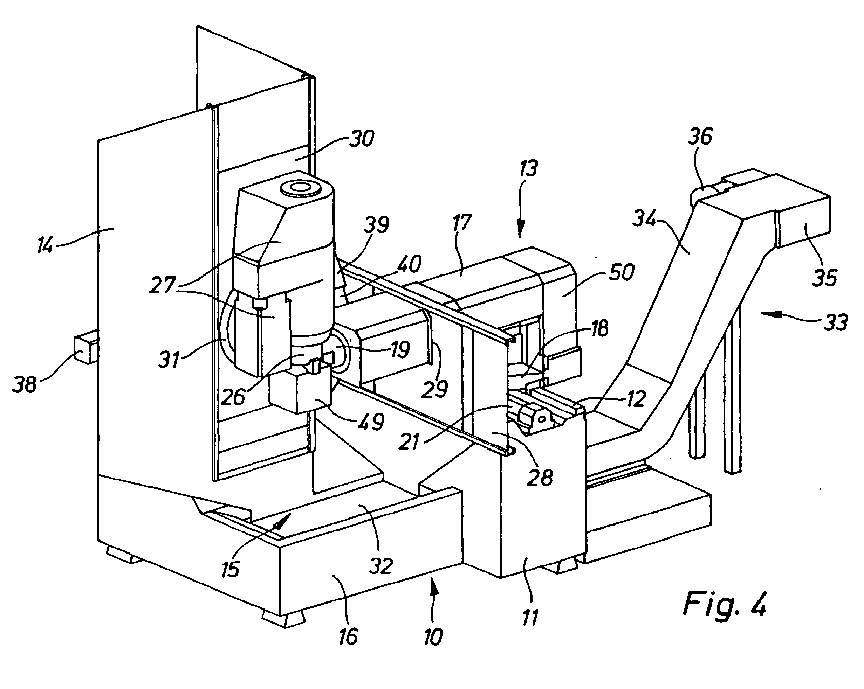

Beim Wechsel von der Drehbearbeitung zur Fräsbearbeitung wird der Drehwerkzeug-Revolver 47 in entsprechender Weise ins Trommelmagazin 37 zurückgebracht, und durch Drehen des Trommelmagazins 37 wird das gewünschte Fräswerkzeug in Position gebracht, um von der Werkzeugspindel 19 ergriffen und zum Bearbeitungsbereich 15 gebracht zu werden. In den Fig. 4 und 5 ist die Fräsbearbeitung dargestellt. Hierbei befindet sich die Werkstückspindel 26 in einer Position mit vertikaler Drehachse. Durch Umschalten des Motorantriebs 50 wird nun die Werkzeugspindel 19 in eine für die Fräsbearbeitung schnelle Rotation versetzt, während durch Umschalten des Motorantriebs 27 dieser nunmehr das Werkstück 49 jeweils für die einzelnen Fräsvorgänge positioniert. In Verbindung mit dem Schlitten 22 und der Schwenkvorrichtung 31 können nahezu beliebige Positionen des Werkstücks 49 eingestellt werden, wobei selbstverständlich auch Bewegungen des Werkstücks 49 während der Fräsbearbeitung möglich sind, um beispielsweise Rundungen oder unebene Fräsflächen zu erzeugen. Ein Wechsel zwischen verschiedenen Fräswerkzeugen ist ebenfalls in der beschriebenen Weise möglich.

Für eine Stangenbearbeitung kann beispielsweise ein horizontales Stangenmagazin im freien Raum oberhalb der ersten Schlittenanordnung 13 bzw. der Führungsbank 11 angeordnet sein. Bei einer gegenüber der Position in Fig. 1 um 180 gedrehten Position der Werkstückspindel 26 kann eine zu bearbeitende Stange von hinten eingeschoben werden. Durch Verschwenken um 90° in die in Fig. 4 dargestellte Position kann die Stange jeweils schwerkraftbedingt bis zu einem nicht näher dargestellten Anschlag absinken, um dann festgespannt zu werden. Danach kann eine Fräsbearbeitung und/ oder Drehbearbeitung erfolgen. Ist ein Endbereich fertigbearbeitet, so holt die Werkzeugspindel 19 das Trennwerkzeug 48 aus dem Trommelmagazin 37 und trennt den bearbeiteten Teil ab. Danach wird die Werkstückspindel 26 in die in Fig. 4 dargestellte vertikale Position geschwenkt, und durch Lösen der Spannvorrichtung der Werkstückspindel 26 erfolgt in der beschriebenen Weise ein Nachschieben der Stange bis zum Anschlag. Nun kann der nächste Bereich bearbeitet werden.

In einer Abwandlung des beschriebenen Ausführungsbeispiels könnte auch für die Werkzeugspindel 19 eine Vertikalbewegung vorgesehen sein, so daß dann die Vertikalbewegung der Werkstückspindel 26 entfallen könnte.

Zur Drehzahlumschaltung der Motorantriebe 27, 50 eignet sich beispielsweise ein in der EP-A-0936958 beschriebenes Umschaltgetriebe.

## Patentansprüche

1. Bearbeitungsmaschine zum Drehen und Fräsen von Werkstücken, mit einer durch einen ersten Motor (50) angetriebenen Werkzeugspindel (19) mit horizontaler Drehachse, die mittels einer ersten Schlittenanordnung (13) wenigstens in den beiden horizontalen Achsen motorisch am Maschinenständer (10) bewegbar ist, mit einer durch einen zweiten Motor (27) angetriebenen Werkstückspindel (26), die schwenkbar am Maschinenständer (10) angeordnet ist, und mit einem Vertikalschlitten (22) zur Vertikalbewegung der Werkzeugspindel (19) oder der Werkstückspindel (26).

2. Bearbeitungsmaschine nach Anspruch 1, dadurch gekennzeichnet, daß der Vertikalschlitten (22) an einem turmartigen Bereich (14) des Maschinenständers (10) motorisch bewegbar ist und die Werkstückspindel (26) trägt, wobei der turmartige Bereich (14) die Werkzeugspindel (19) in der Höhe überragt.

3. Bearbeitungsmaschine nach Anspruch 2, dadurch gekennzeichnet, daß der Bearbeitungsbereich (15) vor dem turmartigen Bereich (14) an dessen mit der Werkstückspindel (26) versehenen Seite angeordnet ist und daß die Werkzeugspindel (19) in diesen Bearbeitungsbereich (15) hineinragt.

4. Bearbeitungsmaschine nach einem der vorhergehenden Ansprüche, dadurch gekennzeichnet, daß die Werkzeugspindel (19) Mittel zur Drehzahlumschaltung zwischen einer zum Fräsen, Bohren und Trennen geeigneten hohen Drehzahl und einer zum Positionieren von Drehwerkzeugen geeigneten niedrigen Drehzahl und/oder daß die Werkstückspindel (26) Mittel zur Drehzahlumschaltung zwischen einer zum Drehen geeigneten hohen Drehzahl und einer zum Positionieren von Werkstücken (49) geeigneten niedrigen Drehzahl besitzt.

5. Bearbeitungsmaschine nach einem der vorhergehenden Ansprüche, dadurch gekennzeichnet, daß die erste horizontale Schlittenanordnung (13) einen die Werkzeugspindel (19) tragenden ersten Schlitten (17) mit einer zur Drehachse der Werkzeugspindel (19) ausgerichteten Bewegungsrichtung und einen diesen ersten Schlitten (17) tragenden zweiten Schlitten (18) aufweist, dessen Bewegungsrichtung senkrecht zur Bewegungsrichtung des ersten Schlittens (17) ausgerichtet ist.

6. Bearbeitungsmaschine nach Anspruch 5, dadurch gekennzeichnet, daß der zweite Schlitten auf einer Führungsbank (11) in deren Längsrichtung bewegbar ist, wobei die Führungsbank (11) zusammen mit dem turmartigen Bereich (14) des Maschinenständers (10) eine den Bearbeitungsbereich (15) einschließende oder zum Teil begrenzende L-förmige Anordnung bildet.

7. Bearbeitungsmaschine nach Anspruch 5 oder 6, dadurch gekennzeichnet, daß ein im wesentlichen als vertikale drehbare Scheibe ausgebildetes Trommelmagazin (37) für Werkzeuge (42, 47, 48) vorgesehen ist, dessen Drehachse parallel zur Drehachse der Werkzeugspindel (19) ausgerichtet und vorzugsweise in derselben Höhe angeordnet ist, derart, daß ein Werkzeugwechsel im wesentlichen durch Bewegung des zweiten Schlittens (18) zwischen dem Trommelmagazin (37) und der Bearbeitungsstellung durchführbar ist.

8. Bearbeitungsmaschine nach Anspruch 7, dadurch gekennzeichnet, daß das Trommelmagazin (37) drehbar im wesentlichen zwischen dem turmartigen Bereich (14) des Maschinenständers (10) und der Führungsbank (11) oder einem anderen Führungsbereich für den zweiten Schlitten (18) angeordnet und vorzugsweise am turmartigen Bereich (14) oder an der Führungsbank (11) oder dem anderen Führungsbereich drehbar gelagert ist.

9. Bearbeitungsmaschine nach Anspruch 7 oder 8, dadurch gekennzeichnet, daß das insbesondere scheibenartige Trommelmagazin umfangsseitig Aufnahmen (41) für Einzelwerkzeuge (42) und wenigstens eine Aufnahme für einen Drehwerkzeug-Revolver besitzt.

10. Bearbeitungsmaschine nach einem der Ansprüche 7 bis 9, dadurch gekennzeichnet, daß wenigstens ein Umfangsbereich des Trommelmagazins (37) eine Aussparung (43) für auswechselbare Einsätze (44 - 46) aufweist, die insbesondere als Halterung für einen Drehwerkzeug-Revolver und/ oder als Halterung für eine Trennscheibe und/oder als Segment mit mehreren Aufnahmen für Einzelwerkzeuge ausgebildet sind.

11. Bearbeitungsmaschine nach einem der vorhergehenden Ansprüche, dadurch gekennzeichnet, daß die Schlittenanordnung (13) für die Werkzeugspindel (19) durch eine horizontal verschiebbare Lamellenabdeckung (28) und die Schlittenanordnung (22) für die Werkstückspindel (26) durch eine vertikal verschiebbare Lamellenabdeckung (30) gegenüber dem Bearbeitungsbereich (15) abgedeckt sind, wobei die Werkzeugspindel (19) und die Werkstückspindel (26) durch die jeweiligen Lamellenabdeckungen (28, 30) hindurchgreifen oder an deren Bearbeitungsbereichsseite angeordnet sind.

12. Bearbeitungsmaschine nach einem der vorhergehenden Ansprüche, dadurch gekennzeichnet, daß ein Späneförderer (33) parallel zur Drehachse der Werkzeugspindel (19) ausgehend vom Bearbeitungsbereich (15) unterhalb der ersten Schlittenanordnung (13) verläuft.
